# EUROPEAN PATENT APPLICATION

(11) **EP 4 786 367 A1**
(43) Date of publication of application: **05.08.2026**
(21) Application number: 25155893.8
(22) Date of filing: 04.02.2025
(51) Int. Cl.: B65D 83/76, B65G 1/04

(54) **A STORAGE BIN**

(71) Applicant: AutoStore Technology AS, 5578 Nedre Vats (NO)
(72) Inventor: Austrheim, Trond, 5578 Nedre Vats (NO); Fjeldheim, Ivar, 5578 Nedre Vats (NO)
(74) Representative: Kilburn & Strode LLP

(57) **Abstract**

The disclosure relates to a storage bin for use in an automated storage and retrieval system comprising a flat baseplate, and a plurality of sidewalls at least partially surrounding the flat baseplate and defining a top opening of the storage bin, wherein the flat baseplate is configured to be moveable with respect to the plurality of sidewalls

## Description

### TECHNICAL FIELD

The disclosure relates to a storage bin. More particularly, it relates to a storage bin having a moveable flat baseplate, a manipulator for moving the flat baseplate up and down within the storage bin, and associated methods for moving the baseplate in an automated storage and retrieval system for presenting the goods to a user or otherwise to be removed from the bin.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The storage bins are designed to securely store the goods inside, such that the storage bins can be stacked on one another and moved around the system without the goods falling out. One conflicting requirement is that the goods can be removed from the storage bin. In the case where a person removes the goods from a storage bin, the person may have to reach in to the bin, over the sidewalls of the bin, and pull the goods out.

A solution to avoiding the detrimental effects of reaching into and pulling out goods from storage bins is to include a moveable floor of the storage bin. Such an arrangement may be actuated from below the bin by pushing one or more rods vertically through holes in the base of the bin. When the storage bin needs to be used again, the rods from underneath the bin may be lowered and the floor lowered with them. Such arrangement allows for goods to be presented above the storage bin. However, the rods and the mechanisms for moving the rods must be positioned underneath the storage bin, requiring the storage bin to be positioned significantly above ground level. Such constraints can create ineffective and sometimes dangerous work environments, for example requiring user platforms to be located up a flight of stairs. There are significant benefits to systems which allow the flexibility to be located on a level with other components, or on a floor of a warehouse.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a conveyor system for a storage system;
Fig. 6 shows a storage bin;
Fig. 7a shows a storage bin in a first configuration;
Fig. 7b shows a storage bin in a second configuration;
Fig. 8 shows a storage bin manipulator;
Fig. 9a shows a conveyor system;
Fig. 9b shows the conveyor system of Fig. 9a in a second configuration;
Fig. 9c shows the conveyor system of Fig. 9a in a third configuration.

### DETAILED DESCRIPTION

In overview, the disclosure relates to a storage bin and a manipulator for improving access to contents or load stored in the storage bin. The storage bin includes a moveable baseplate that is flat, so that the baseplate may be raised and lowered to allow lateral access of the contents. The baseplate and the manipulator are configured so that the manipulator may access the baseplate from above. By accessing the baseplate from above, the mechanism and associated components of the manipulator may be placed above the storage bin. This allows for a compact system relative to manipulators which push a baseplate of a storage bin from below since the storage bins may be placed closer to or on a floor of a warehouse. Further, since the contents are moved laterally from a lower position from the floor of a warehouse, the contents may already be located at an appropriate height for a user or operated to manually interact with the contents without requiring the contents or load to be further moved up or down.

### Automated storage and retrieval system overview

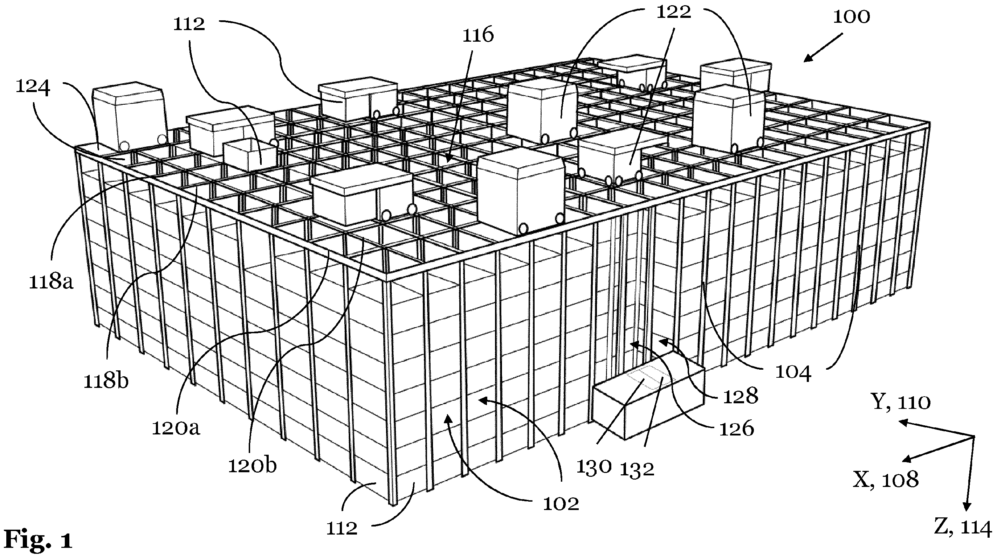

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

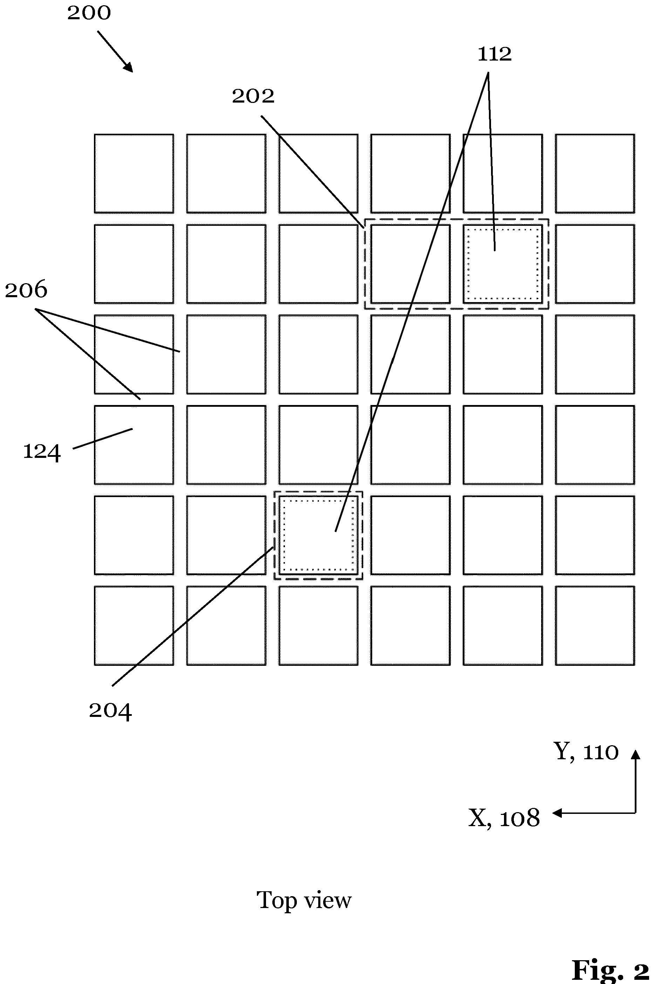

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

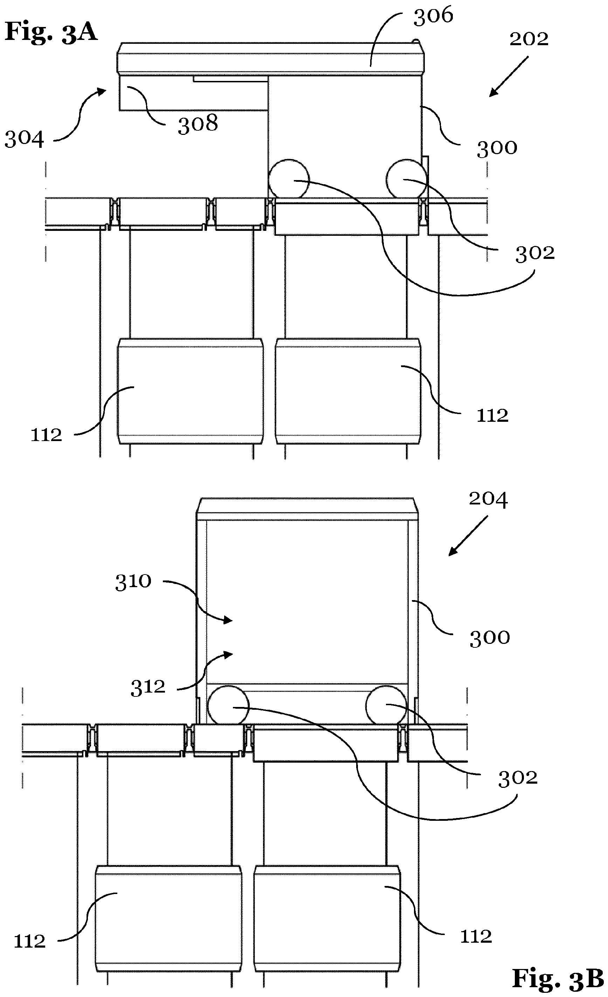

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

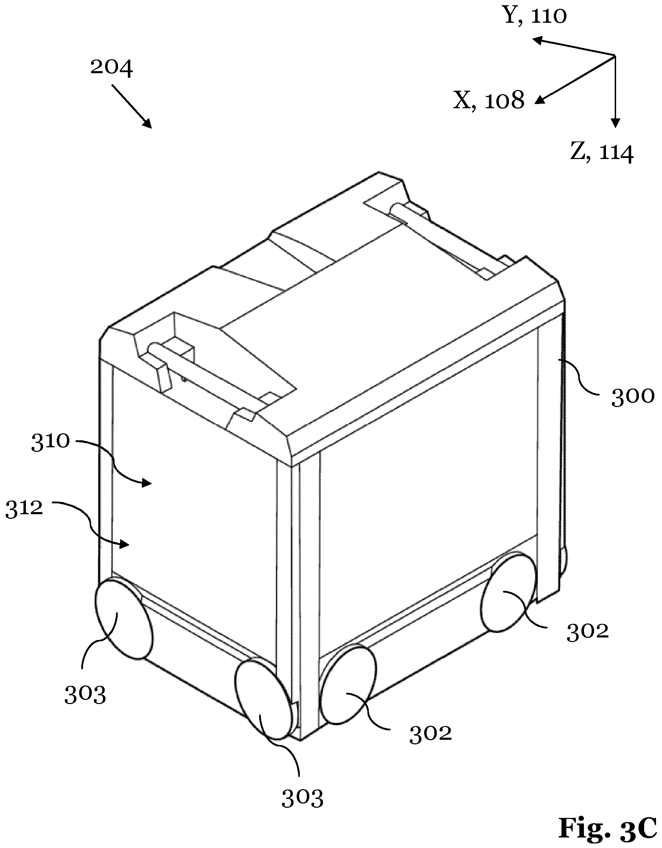

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

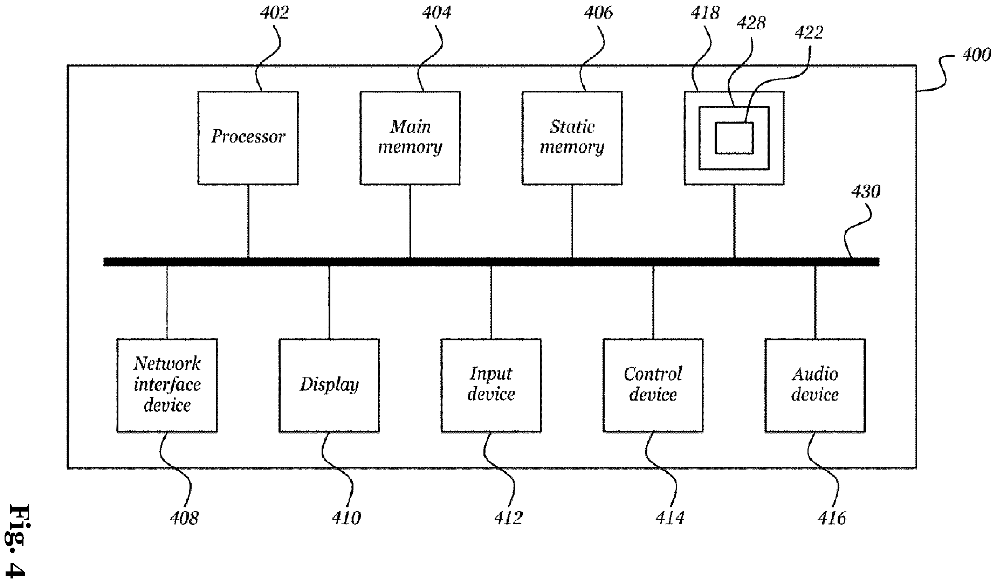

Control and monitoring of the automated storage and retrieval system, including monitoring and storing bin position and controlling bin provision, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for provision to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

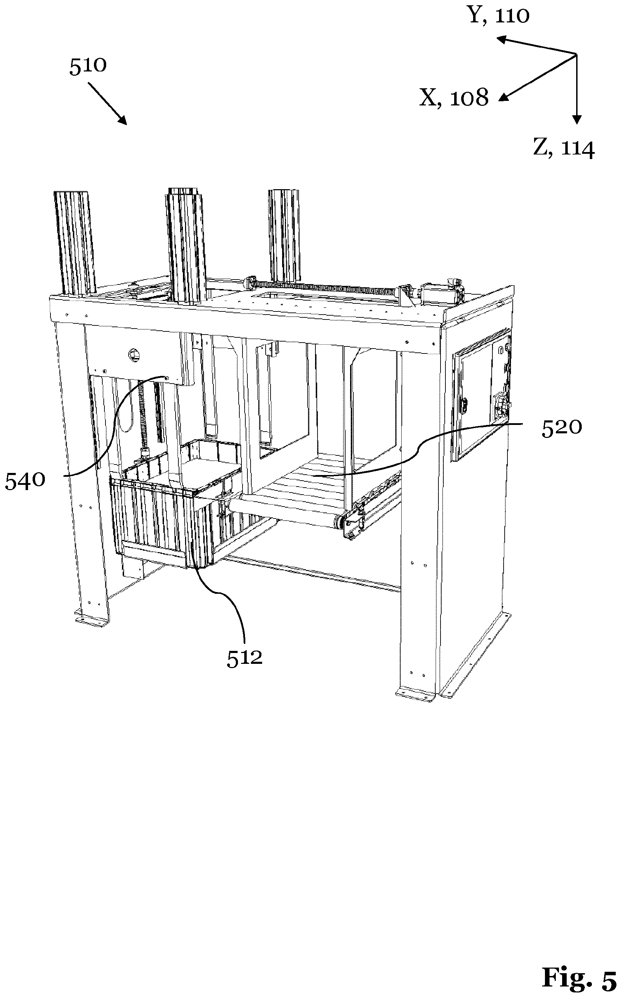

Fig. 5 shows an access station 510 for an automated storage and retrieval system. A storage bin 512 may be transported to the access station 510. The purpose of the access station 510 is to allow a load or contents of the storage bin 512 to be accessed. This could include access by a person, another system or robot, or for being transported on a conveyor or similar. In the example shown in Fig. 5, a conveyor 520 is shown adjacent to the storage bin 512. One problem to overcome is how to effectively move contents or a load from a storage bin to a conveyor, and from a conveyor to a storage bin. In some instances, a load or bin contents may be raised from below the storage bin. However, such systems require space for actuation components below the storage bin. This may not always be possible or desirable since this may raise the corresponding conveyor further from the ground. The access station 510 shown in Fig. 5 provides actuation of the storage bin 512 from above, such that other mechanisms may be located below the conveyor 520, such as mechanisms for conveying the storage bin 512, or for movement of additional robots or mechanisms. The access station of Fig. 5 uses a specific storage bin 512 as well as a specific bin manipulator 540 which will be described herein, allowing such arrangement of the access station 510.

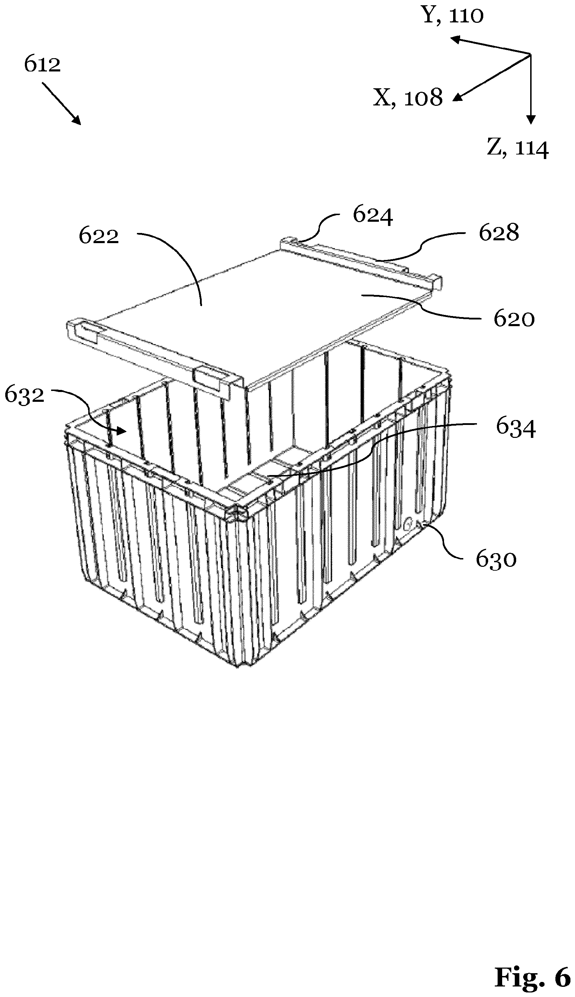

Fig. 6 shows a bin 612 for use in an automated storage and retrieval system that may be transported along the top of the grid 100 to and/or from a port column 126, 128 by robots 122, and from a port 130, 132 to a location outside the grid 100, which may be an access station 510 for processing of the bin 612 or its contents, such as a picking station for adding content to, or removing content from, the bin 612. The storage bin 612 may comprise a flat baseplate 620 and a plurality of sidewalls 630 at least partially surrounding the flat baseplate 620. The plurality of sidewalls 630 define a top opening 632 of the storage bin 612. The top opening 632 may be left open so that the contents or load of the storage bin 612 can be accessed from above the storage bin 612, or the top opening 632 may be covered by a lid (not shown).

The flat baseplate 620 is described as being flat because it does not include any sidewalls for containing a load inside the bin 612. When the bin 612 is storing a load, the load may be contained by the plurality of sidewalls 630 of the bin, but not by any additional sidewalls physically attached to the flat baseplate 620. In other words, when the flat baseplate 620 is not surrounded by the plurality of sidewalls 630, horizontal pushing of the contents or load on the flat baseplate 620 (in either the X 108, or Y 110 directions) will result in the contents or load sliding off the baseplate or tipping over the side of the baseplate 620. The flat baseplate 620 provides only a bottom support of the contents or load, and does not laterally contain the contents or load of the bin 612.

When the flat baseplate 620 is located in the storage bin 612, it may sit at the bottom of the plurality of sidewalls 630. That is, the flat baseplate 620 may normally rest in the Z axis 114 on top of one or more mechanical stops 634. The mechanical stops 634 may be mounted to each of the plurality of sidewalls 630. The mechanical stops 634 may together form a mesh or slatted structure at the bottom of the storage bin 612. The mechanical stops 632 provide support for the flat baseplate 620 from below a bottom surface of the flat baseplate. In this way, the mechanical stops 634 provide a physical support on which the flat baseplate 620 may rest when lowered into the plurality of sidewalls 630. When a load or contents of the bin 612 are being stored, it is this location, with the flat baseplate 620 resting on the mechanical stops 632 at the bottom of the storage bin 612 will typically be positioned.

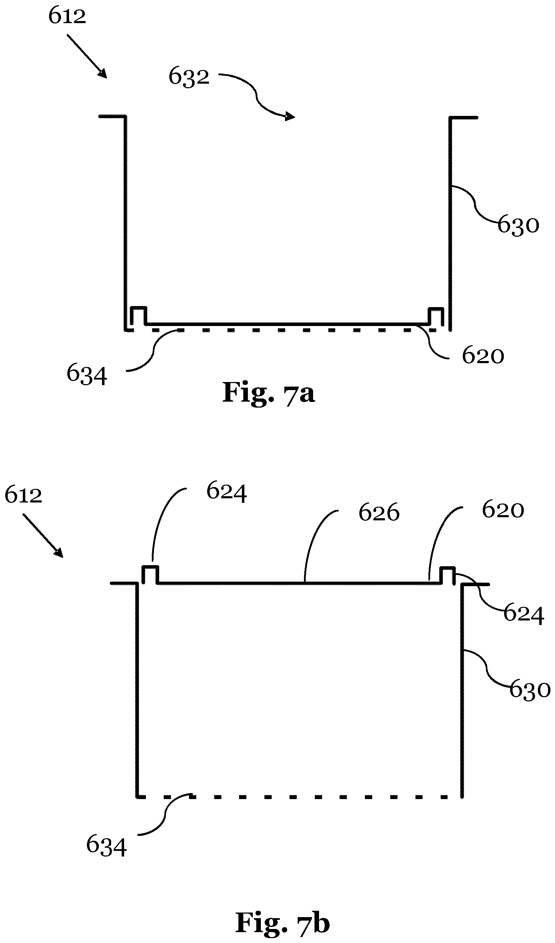

Fig. 7a shows a side view of the bin 612 of Fig. 6 as a schematic. Fig. 7b shows the side view of Fig. 7a in which the flat baseplate 620 has been raised. Flat baseplate 620 is sized to fit inside the plurality of sidewalls 630 with sufficient clearance so as to be moveable with the plurality of sidewalls 630. The flat baseplate 620 also includes a support element 624. The support element 624 may include a projection, a hook, a slot, or attachment means. The support element 624 is accessible from above the flat baseplate 620. Specifically, the support element 624 may be accessed by a manipulator from a position above the top surface 626 of the flat baseplate 620. In this way, by providing support elements 624 accessible from above, the manipulator for moving the baseplate between a lowered position as shown in Fig. 7a and a raised position as shown in Fig. 7b may be positioned above the storage bin 612 in use. It will be appreciated that Figs. 7a and 7b show two support elements 624 on the flat baseplate 620. However, any suitable number of support elements 624 may be used. For example, one, two, or four support elements 624 may be provided on the flat baseplate 620. A corresponding manipulator may be used in order to raise or lower the flat baseplate 620 relative to the surrounding plurality of sidewalls 630. Once the baseplate 620 has been raised relative to the sidewalls 630 to the position shown in Fig. 7b, the load or contents resting on the baseplate 620 may be pushed or otherwise removed to the side of the bin, such as in the conveyor 520 in Fig. 5. Additionally, the baseplate 620 may be fully removed from the plurality of sidewalls 630. In this way, the load or contents resting on the baseplate may be held in position on the baseplate 620 for a short period of time. When the baseplate 620, including the load or contents is required to be stored again, either the same or a new plurality of sidewalls 630 may be raised into position such that the baseplate 620 is lowered into the plurality of sidewalls 630.

Turning again to Fig. 6, the support element 624 of the baseplate 620 may include a lip 628 extending along an edge of the baseplate 620. The lip 628 may protrude above a top surface 622 of the baseplate 620. The lip 628 may protrude a small amount above the top surface 622 such that a load or contents on the baseplate 620 may be guided along the baseplate 620 but without containing the load or contents within the bin 612. In some instances, the lip may protrude above the top surface 622 of the baseplate 620 by about 10mm. In some instances, the lip may protrude above the top surface 622 of the baseplate 620 by no more than 25mm. In some instances, the lip may protrude above the top surface 622 of the baseplate 620 by no more than 50mm. In some instances, the lip may protrude above the top surface 622 of the baseplate 620 by no more than 2% of a height of the plurality of sidewalls 630. In some instances, the lip may protrude above the top surface 622 of the baseplate 620 by no more than 5% of a height of the plurality of sidewalls 630. In some instances, the lip may protrude above the top surface 622 of the baseplate 620 by no more than 10% of a height of the plurality of sidewalls 630. In further examples, the flat baseplate 620 may comprise no lip at all. That is, the support elements 624 of the baseplate 620 may sit flush with the top surface 622, or the support elements 624 of the baseplate 620 may not protrude above the top surface 622.

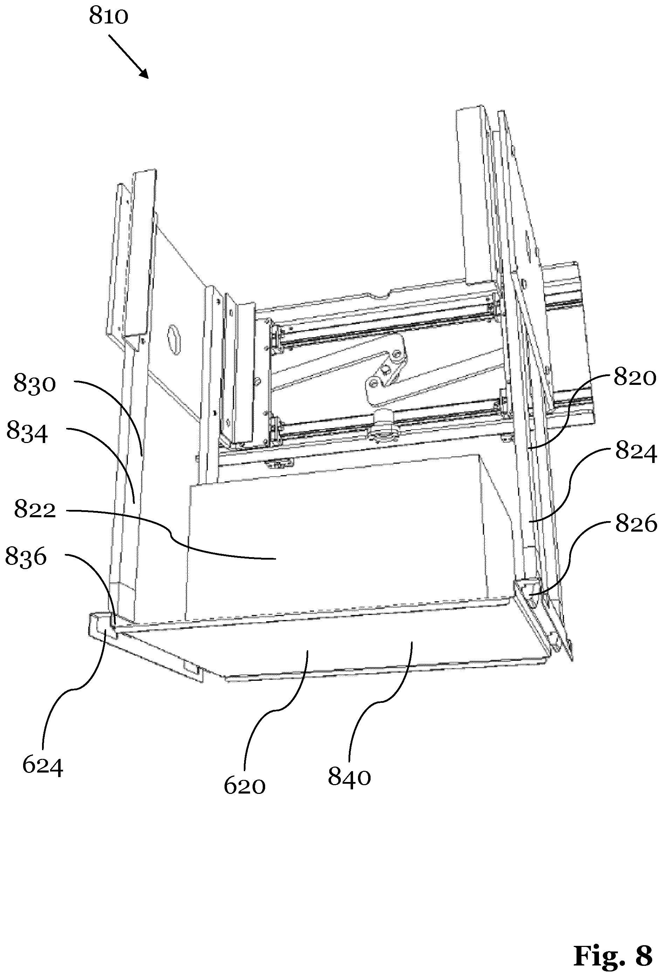

Fig. 8 shows a storage bin manipulator 810 for use in an automated storage and retrieval system as described herein. The storage bin manipulator 810 shown in Fig. 8 is configured to operate with the storage bin 612 shown in Fig. 6. The manipulator 810 comprises an end effector 820 configured to support the baseplate 620 from above the top surface 622. Fig. 8 also shows a baseplate 620 and a load in the form of a box 822 resting on the baseplate 620. Sidewalls of the bin 612 are not shown in Fig. 8 to allow the manipulator 810 to be more easily seen.

The end effector 820 shown in Fig. 8 includes an arm 824 configured to fit down one side of the storage bin 612. At the bottom end of the arm 824 is a single jaw 826. In use, the end effector 820 may slide down the side of the storage bin 612 and engage with the support element 624 from above. Where the support element 624 is in the form of a slot and the end effector comprises a jaw 826, the jaw may pass through the support element 624 from above and the jaw 826 is then moved to engage with the slot 624. As shown in Fig. 8, the manipulator 810 may comprise additional end effectors, such as second end effector 830. Second end effector 830 may be the same as end effector 820, including an arm 834 and a jaw 836. Together, the first jaw 826 and the second jaw 836 may engage with corresponding support elements 624 of the baseplate 620 to raise or lower the baseplate relative to the sidewalls. The first end effector 820 and the second end effector 830 are each located at opposite ends of the baseplate 620 such that together they fully support the baseplate 620. When the jaws 826 and the jaws 836 project through the baseplate 620 and engage with the baseplate 620, the jaws 826, 836 may engage with an underside 840 of the baseplate 620. In this way, the support elements 624 of the baseplate 620 allow the manipulator 810 to engage with the baseplate 620 from above, but by engaging the underside 840 of the baseplate 620. In either case, whether the support elements 624 allow the manipulator 810 to engage with a top surface 622 of the baseplate 620, or with the underside 840 of the baseplate 620, the manipulator 810 may be located above and access the baseplate 620 from above, the storage bin 612.

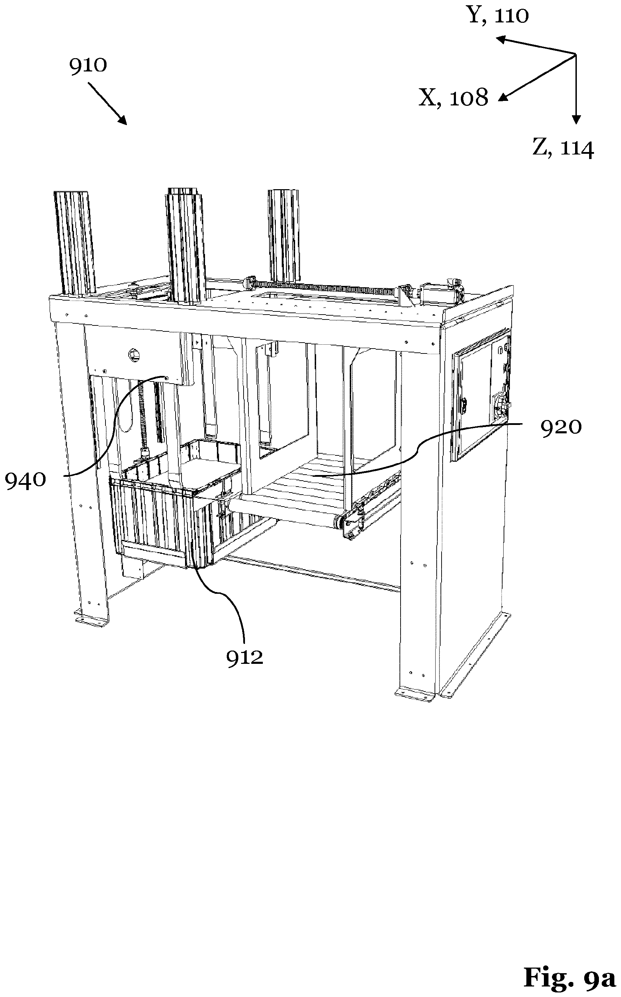

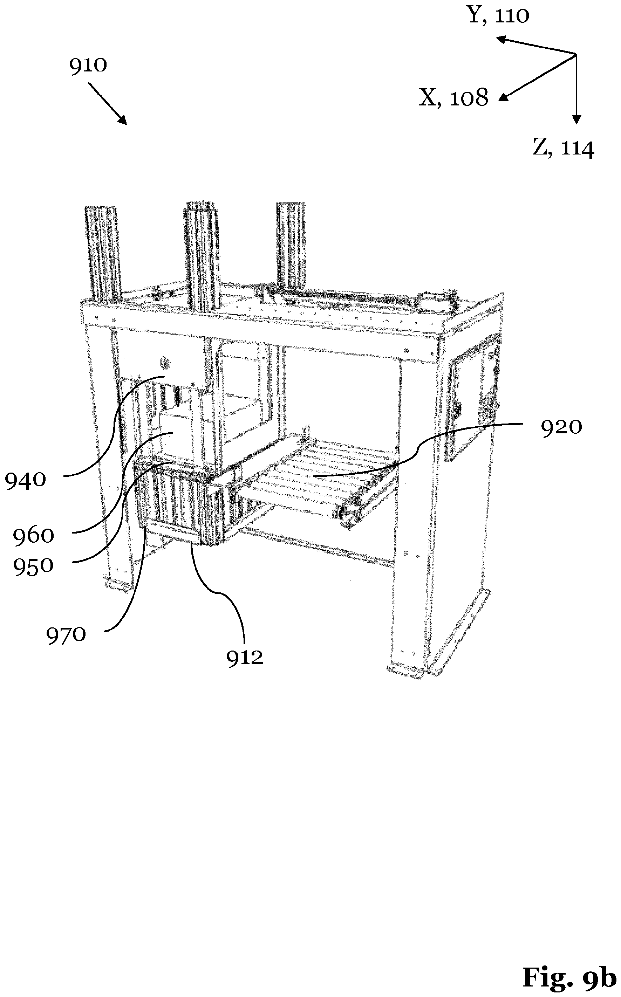

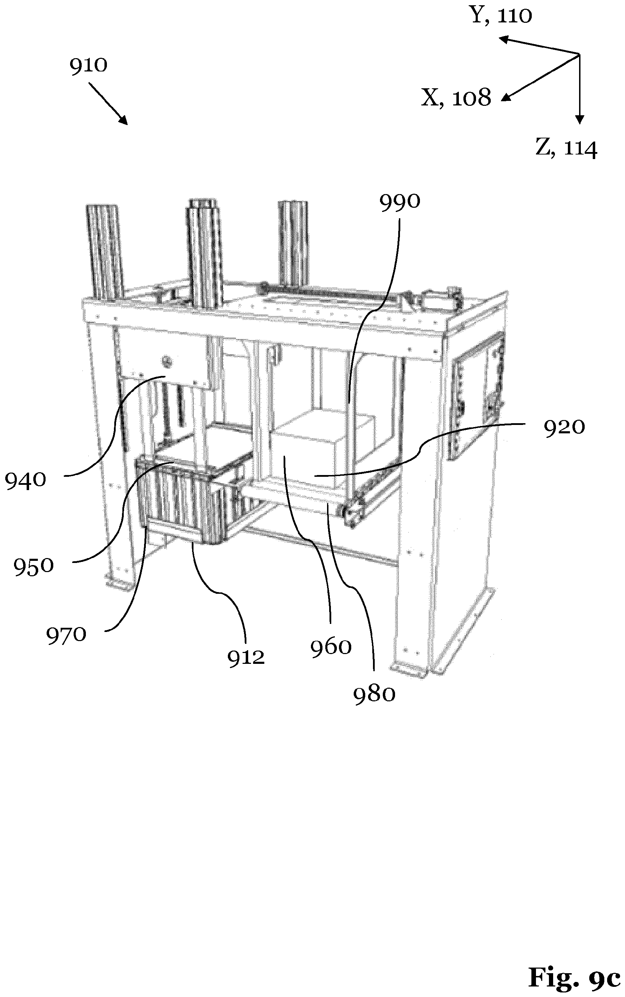

Fig. 9a shows a first step in a method of manipulating a storage bin 912 such as storage bins 512, 612 described herein, using a manipulator 940 such as manipulator 810 described herein. The contents of storage bin 912 may be initially located within the sidewalls of the storage bin 912. As shown in Fig. 9a, the manipulator is positioned above the storage container 912. The manipulator 940 may be lowered into the storage bin 912 to engage with and support the baseplate as is shown in Fig. 8. Once the manipulator 940 supports the baseplate, the baseplate 950 may be raised to the position shown in Fig. 9b. The load or contents 960 are now positioned above the sidewalls of the storage bin 912, such that the contents 960 are not restricted from sideways motion by the storage bin 912. Whilst Figs. 9a and 9b show a manipulator 940 moving relative to the sidewalls of the storage bin 912, it is also contemplated that the manipulator 940 may hold the baseplate stationary, whilst a support 970 holding the sidewalls of the bin 912 is moved downwardly. In effect, in either instance, the contents 960 will be raised relative to the sidewalls of the bin 912 such that the sidewalls not longer restrict sideways motion of the contents 960. Turning to Fig. 9c, the contents 960, unrestricted by the sidewalls of the bin 912, have been moved laterally to the conveyor 980. The contents 960 may be moved laterally by a lateral actuator 990, or they may be moved by other means, such as manually by a user. In any case, the lateral movement of the contents 960 is not contained by the storage bin 912, either by the sidewalls of the storage bin 912, or by the baseplate of the storage bin 912. It will be appreciated that Figs. 9a to 9c show contents 960 of the storage bin 912 being taken from the storage bin 912 and moved to a conveyor 980. To load contents 960 into the storage bin 912, the exact reverse steps may be taken. The contents 960 may be moved laterally from the conveyor 980 to the baseplate of the storage bin 912 as shown in Fig. 9b, and then the baseplate and contents 960 may be lowered into the storage bin 912 by the manipulator 940. The storage bin 912 may then be transferred to the grid or elsewhere in the automated storage and retrieval system for storage.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.
The following is a list of aspects which may or may not be claimed:
Aspect 1. A storage bin for use in an automated storage and retrieval system comprising
   a flat baseplate, and
   a plurality of sidewalls at least partially surrounding the flat baseplate and defining a top opening of the storage bin, wherein
      the flat baseplate is configured to be moveable with respect to the plurality of sidewalls, and
   wherein the flat baseplate comprises at least one support element accessible from above a top surface of the flat baseplate.
Aspect 2. The storage bin according to aspect 1, wherein the flat baseplate comprises a second support element accessible from above the top surface of the flat baseplate.
Aspect 3. The storage bin according to aspect 2, wherein the first support element is disposed at a first end of the flat baseplate and wherein the second support element is disposed at a second end of the flat baseplate, the second end being opposite the first end.
Aspect 4. The storage bin according to aspect 2 or aspect 3, wherein the first support element and the second support element each comprise a slot configured to receive an end effector for supporting the flat baseplate.
Aspect 5. The storage bin according to any preceding aspect, wherein each of the plurality of sidewalls comprises a mechanical stop configured support the flat baseplate from below a bottom surface of the flat baseplate.
Aspect 6. The storage bin according to any preceding aspect, wherein the flat baseplate is moveable with respect to the plurality of sidewalls between a position at the bottom of the storage bin and a position at the top opening of the storage bin.
Aspect 7. The storage bin according to any preceding aspect, wherein the flat baseplate is fully removable from the plurality of sidewalls.
Aspect 8. The storage bin of any preceding aspect, wherein the at least one support element comprises a lip defining an edge of the flat baseplate.
Aspect 9. The storage bin of any preceding aspect, wherein the at least one support element is flush with the top surface of the flat baseplate.
Aspect 10. A storage bin manipulator for use in an automated storage and retrieval system wherein the storage bin comprises a plurality of sidewalls at least partially surrounding a moveable baseplate, wherein the manipulator comprises a first end effector configured to support the baseplate from above a top surface of the baseplate.
Aspect 11. The storage bin manipulator of aspect 10, wherein the manipulator comprises a second end effector configured to support the baseplate from above a top surface of the baseplate, and wherein the first end effector is configured to support the baseplate at a first end of the baseplate and the second end effector is configured to support the baseplate at a second end of the baseplate.
Aspect 12. The storage bin manipulator of aspect 10, wherein the first end effector comprises a pair of jaws configured to grip the baseplate.
Aspect 13. The storage bin manipulator of aspects 10 to 12, wherein the first end effector is configured to project through the baseplate and to engage the baseplate on a bottom surface of the baseplate.
Aspect 14. The storage bin manipulator of aspects 10 to 13, wherein the manipulator is configured to move relative to the plurality of sidewalls of the storage bin such that the baseplate moves relative to the plurality of sidewalls.
Aspect 15. A method of manipulating a storage bin in an automated storage and retrieval system comprising
   supporting via a first support, a plurality of sidewalls that at least partially surround a baseplate moveable relative to the plurality of sidewalls,
   supporting the baseplate via an end effector from above a top surface of the baseplate, and
   moving the first support and the first end effector relative one another such that the baseplate and the plurality of sidewalls move relative to one another.
Aspect 16. The method of aspect 15, wherein moving the first support and the first end effector relative one another comprises holding the first support stationary and moving the first end effector, or wherein moving the first support and the first end effector relative one another comprises holding the first end effector stationary and moving the first support.
Aspect 17. The method of aspect 15 or aspect 16, further comprising
   pushing a load on to or off the baseplate by sliding the load laterally across the baseplate.
Aspect 18. The method of any of aspects 15 to 17, further comprising
   moving the storage bin to a storage location.
Aspect 19. An automated storage and retrieval system comprising:
   a bin having a baseplate and a plurality of sidewalls at least partially surrounding the baseplate and defining a top opening of the storage bin, wherein the baseplate is configured to be moveable with respect to the plurality of sidewalls, and
   a storage bin manipulator comprising an end effector configured to support the baseplate from above a top surface of the baseplate.
Aspect 20. The automated storage and retrieval system of aspect 19, wherein the storage bin is a storage bin according to any of aspects 1 to 9, and wherein the storage bin manipulator is a storage bin manipulator according to any of aspects 10 to 14.

## Claims

1. A storage bin for use in an automated storage and retrieval system comprising a flat baseplate, and
a plurality of sidewalls at least partially surrounding the flat baseplate and defining a top opening of the storage bin, wherein
the flat baseplate is configured to be moveable with respect to the plurality of sidewalls, and
wherein the flat baseplate comprises at least one support element accessible from above a top surface of the flat baseplate.

2. The storage bin according to claim 1, wherein the at least one support element comprises a slot configured to receive an end effector for supporting the flat baseplate.

3. The storage bin according to any preceding claim, wherein each of the plurality of sidewalls comprises a mechanical stop configured support the flat baseplate from below a bottom surface of the flat baseplate.

4. The storage bin according to any preceding claim, wherein the flat baseplate is moveable with respect to the plurality of sidewalls between a position at the bottom of the storage bin and a position at the top opening of the storage bin.

5. The storage bin of any preceding claim, wherein the at least one support element comprises a lip defining an edge of the flat baseplate.

6. The storage bin of any preceding claim, wherein the at least one support element is flush with the top surface of the flat baseplate.

7. A storage bin manipulator for use in an automated storage and retrieval system wherein the storage bin comprises a plurality of sidewalls at least partially surrounding a moveable baseplate, wherein the manipulator comprises a first end effector configured to support the baseplate from above a top surface of the baseplate.

8. The storage bin manipulator of claim 7, wherein the first end effector comprises a jaw configured to grip the baseplate.

9. The storage bin manipulator of claim 7 or claim 8, wherein the first end effector is configured to project through the baseplate and to engage the baseplate on a bottom surface of the baseplate.

10. A method of manipulating a storage bin in an automated storage and retrieval system comprising
supporting via a first support, a plurality of sidewalls that at least partially surround a baseplate moveable relative to the plurality of sidewalls, supporting the baseplate via an end effector from above a top surface of the baseplate, and
moving the first support and the first end effector relative one another such that the baseplate and the plurality of sidewalls move relative to one another.

11. The method of claim 10, wherein moving the first support and the first end effector relative one another comprises holding the first support stationary and moving the first end effector, or wherein moving the first support and the first end effector relative one another comprises holding the first end effector stationary and moving the first support.

12. The method of claim 10 or claim 11, further comprising
pushing a load on to or off the baseplate by sliding the load laterally across the baseplate.

13. The method of any of claims 10 to 12, further comprising moving the storage bin to a storage location.

14. An automated storage and retrieval system comprising:
a bin having a baseplate and a plurality of sidewalls at least partially surrounding the baseplate and defining a top opening of the storage bin, wherein the baseplate is configured to be moveable with respect to the plurality of sidewalls, and
a storage bin manipulator comprising an end effector configured to support the baseplate from above a top surface of the baseplate.

15. The automated storage and retrieval system of claim 14, wherein the storage bin is a storage bin according to any of claims 1 to 6, and wherein the storage bin manipulator is a storage bin manipulator according to any of claims 7 to 9.
